# EUROPÄISCHE PATENTANMELDUNG

(11) **EP 0 740 093 A1**
(43) Veröffentlichungstag der Anmeldung: **30.10.1996**
(21) Anmeldenummer: 96104009.4
(22) Anmeldetag: 14.03.1996
(51) Int. Cl.: F16K 1/20, B65D 90/62

(54) **Absperrklappe mit federbelastetem Verschlussteil**

(30) Priorität: 30.03.1995 DE 19511756
(71) Anmelder: GESTRA AG, D-28215 Bremen (DE)
(72) Erfinder: Lutz, Jürgen, 28203 Bremen (DE)
(74) Vertreter: Eisenführ, Speiser & Partner

(57) **Zusammenfassung**

Eine Beschädigung oder ein Defekt der Feder (21) ist bei bekannten Absperrklappen nicht ohne weiteres ersichtlich, was für die Funktionssicherheit einen bedeutenden Nachteil darstellt. Die Zug- oder Druckfeder (23) der neuen Absperrklappe ist außerhalb des Ventilgehäuses (1) angeordnet. Dort ist an der Betätigungswelle (11) quer ein Schwenkarm (18) angeordnet, an dessen wellenfernes Ende die Feder (23) angreift. Das andere Ende der Feder (23) ist an einem außen am Ventilgehäuse (1) vorgesehenen Widerlager (20) gehalten. Der Mitnehmer (22) und das Widerlager (20) sind so angeordnet, daß in Schließstellung eine gedachte Verbindungslinie (24) zwischen dem Widerlager (20) und dem Mitnehmer (22) mit einem sich in Richtung der Schließbewegung erstreckenden seitlichen Versatz (25) quer zur Wellenlängsachse (17) verläuft. Die Funktionstüchtigkeit der Feder (23) ist stets ersichtlich. Zudem kann ein leichtbauendes Ventilgehäuse (1) realisiert werden, und ein Sperrmechanismus, um das Verschlußteil (9) in Offen- oder Schließstellung zu halten, erübrigt sich.

## Beschreibung

Die Erfindung betrifft eine Absperrklappe der im Oberbegriff des Hauptanspruches spezifizierten Art.

Derartige Absperrklappen dienen vielfach zum Verschließen der Befüll- und/oder Entleerungsöffnungen von Behältern. Es kann sich um stationäre Behälter, aber auch um Transportbehälter handeln, z. B. Eisenbahnkesselwagen, Straßentankwagen oder Tankcontainer, um nur einige Beispiele zu nennen.

Eine bekannte derartige Absperrklappe (DE-PS 834 168) weist eine hohle Betätigungswelle auf, in der sich eine als Torsionsglied wirkende Feder befindet. Eine auf den Betätigungshebel ausgeübte Kraft wird über diese Feder auf die Betätigungswelle und das damit fest verbundene Verschlußteil übertragen. Die Feder bestimmt somit die maximal auf das Verschlußteil ausübbare Betätigungskraft. Eine höhere Kraft, wie sie z. B. notwendig werden kann, um einen evtl. auftretenden zusätzlichen Widerstand beim Öffnen oder Schließen zu überwinden, kann bei dieser bekannten Absperrklappe nicht ausgeübt werden. Um die Absperrklappe geschlossen zu halten, ist an dem Betätigungshebel eigens ein Sperrmechanismus erforderlich. Sollte an der hohlen Betätigungswelle eine Leckage auftreten, dann gelangt Durchflußmedium aus dem Ventilgehäuse an die Feder, ohne daß dies von außen erkannt wird. Aggressives Durchflußmedium kann eine Beschädigung der Feder verursachen. Eine Beschädigung oder gar ein Defekt der Feder ist von außen nicht ersichtlich, was insbesondere hinsichtlich der Funktionssicherheit einen bedeutenden Nachteil darstellt.

Bei einer anderen bekannten Absperrklappe (EP-OS 430 664) sind der Betätigungshebel und die Betätigungswelle direkt miteinander verbunden, so daß eine große Betätigungkraft auf das Verschlußteil ausgeübt werden kann. Die als Torsionsglied ausgebildete Feder ist in einer speziellen, geschlossenen Kammer des Ventilgehäuses untergebracht, in die die Betätigungswelle hineinragt. Bei einem Defekt der Wellenabdichtung dringt Durchflußmedium in die separate Kammer und damit an die Feder. Der Zustand der Feder ist auch bei dieser Absperrklappe von außen nicht zu ersehen. Der entsprechende Nachteil für die Funktionssicherheit besteht somit auch hier. Überdies führt die für die Feder benötigte Kammer zu einer sehr ausladenden Form des Ventilgehäuses.

Der Erfindung liegt die Aufgabe zugrunde, eine Absperrklappe der eingangs genannten Art zu schaffen, der eine hohe Funktionssicherheit eigen ist.

Diese Aufgabe wird durch die im Anspruch 1 angegebenen Merkmale gelöst.

Die Feder hält das Verschlußteil selbstätig in Schließstellung. Die Feder befindet sich zudem völlig außerhalb des Einflußbereiches des Durchflußmediums. Bei der Festlegung des Federwerkstoffes muß daher auf die Aggressivität des Durchflußmediums keine Rücksicht genommen werden, so daß mit kostengünstigen Werkstoffen eine sehr hohe Lebensdauer der Feder gewährleistet ist. Der Zustand der Feder fällt überdies jederzeit ins Auge. Ein besonders hohes Maß an Funktionssicherheit resultiert daraus. Die extern angeordnete, als Hubglied ausgebildete Feder erfordert keine ausladende Gehäuseform. Das Materialvolumen des Ventilgehäuses und damit das Gewicht der Absperrklappe kann vielmehr sehr gering gehalten werden, was für diverse Einsatzfälle von großem Vorteil ist, z. B. an Tankcontainern.

Die Unteransprüche haben vorteilhafte Weiterbildungen der Erfindung zum Gegenstand.

Durch die Merkmale des Anspruches 2 wird erreicht, daß das Verschlußteil durch die Feder nicht nur in Schließstellung, sondern auch in Offenstellung gehalten wird. Nähert sich das Verschlußteil seiner Offenstellung, dann kehrt sich die Wirkrichtung der von der Feder auf die Betätigungswelle und damit auf das Verschlußteil ausgeübten Kraft um. Aus der anfänglichen Schließkraft wird eine Öffnungskraft. Das Verschlußteil schnappt daraufhin in die Offenstellung und wird dort gehalten. Zum Schließen muß das Verschlußteil zunächst gegen die in Öffnungsrichtung wirkende Kraft der Feder bewegt werden, bis sich bei Annäherung des Verschlußteiles an die Schließstellung die Federkraft wieder in eine Schließkraft umkehrt. Das Verschlußteil schnellt sodann in seine Schließstellung und wird dort durch die Feder dichtend auf den Ventilsitz gepreßt. Besonders vorteilhafte Ausgestaltungen hierzu gibt der Anspruch 3 für die Verwendung einer Zugfeder an, während der Anspruch 4 für eine Druckfeder gilt.

Eine besonders vorteilhafte Verbindung von Betätigungswelle und Schwenkarm hat der Anspruch 5 zum Gegenstand. Die Konusverbindung ist in der Lage, die notwendigen Betätigungskräfte zu übertragen. Zugleich ermöglicht sie eine stufenlose Relativjustierung von Betätigungswelle und Schwenkarm und damit eine optimale Positionierung des Mitnehmers zur Wellenlängsachse und zum Widerlager. Sämtliche Fertigungstoleranzen, die einen Einfluß auf die Winkelstellung des Verschlußteiles zu den der Betätigung dienenden Teilen haben, können problemlos kompensiert werden.

Eine bevorzugte Ausgestaltung des Betätigungsmittels für eine manuelle Betätigung der Absperrklappe gibt der Anspruch 6 an. Die Merkmale des Anspruches 7 bieten die Möglichkeit, die Betätigungswelle bei der Montage der Absperrklappe, wenn der Schwenkarm in seine Sollstellung bewegt wird, durch ein Drehwerkzeug, z. B. einen Schraubenschlüssel, in Schließstellung halten zu können. Eine optimale Relativposition beider Teile ist so sichergestellt. Außerdem ermöglichen die Angriffsflächen eine Notbetätigung der Absperrklappe, z. B. bei einer Beschädigung des Betätigungshebels. Gemäß Anspruch 8 ragt die Betätigungswelle nicht über den Schwenkarm hinaus, so daß vor diesem eine ungehinderte Bewegung der Feder möglich ist. Anstelle eines nur vorübergehend angreifenden Schraubenschlüssels kann ein Hebel stationär auf den Vielkant aufgesetzt sein. Zusätzlich zu den bereits angegebenen Funktionen ermöglicht er im Bedarfsfall eine Fernbetätigung der Absperrklappe, z. B. im Notfall einen Schließen über eine mit dem Hebel verbundene Reißleine.

Die Merkmale des Anspruches 9 ergeben ein Ventilgehäuse, dessen Materialvolumen und damit auch Gewicht besonders gering gehalten werden kann. Die Anordnung aller Funktionselemente der Absperrklappe ist auf den an den Behälter angrenzenden Gehäuseteil konzentriert. Nur dort muß das Ventilgehäuse für die Aufnahme bzw. Halterung der Funktionselemente gestaltet sein. Die Aufgabe des übrigen Gehäuseteiles beschränkt sich auf die Bildung des Durchflußkanales. Dieser kann sehr dünnwandig ausgeführt werden, so daß ein besonders leichtbauendes Ventilgehäuse erreicht wird. Unterschiedliche Gehäusebaulängen können realisiert werden, ohne daß dazu Änderungen im Bereich des Betätigungsmechanismus erforderlich sind.

In der Zeichnung sind Ausführungsbeispiele der erfindungsgemäßen Absperrklappe dargestellt. Es zeigt
- Fig. 1: eine erste Absperrklappe in Schließstellung im Längsschnitt,
- Fig. 2: die erste Absperrklappe in Schließstellung im Schnitt 2 - 2,
- Fig. 3: eine Einzelheit der ersten Absperrklappe im Schnitt 3 - 3,
- Fig. 4: die erste Absperrklappe in Schließstellung in Seitenansicht,
- Fig. 5: die erste Absperrklappe in Offenstellung in Seitenansicht und
- Fig. 6: eine zweite Absperrklappe in Schließstellung in Seitenansicht.

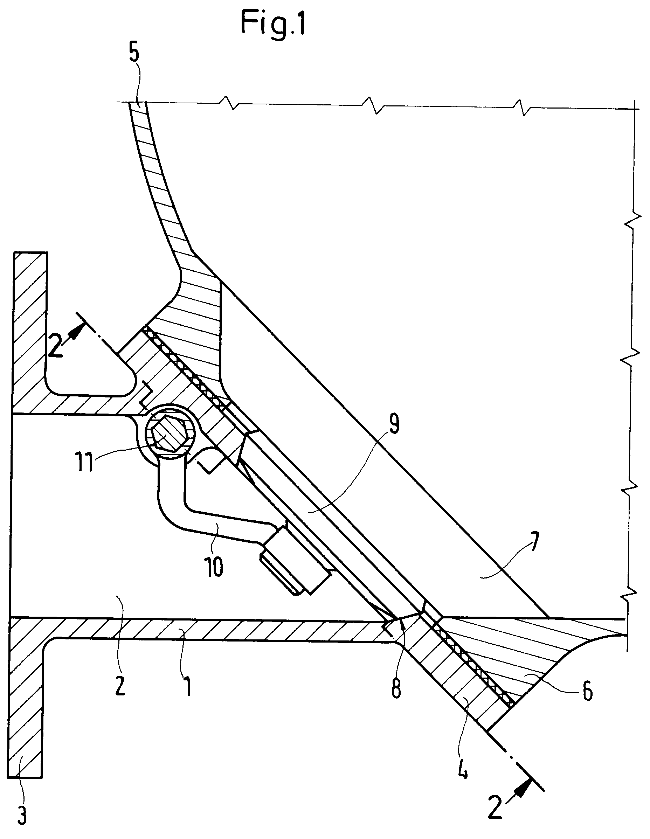

In Fig. 1 weist die Absperrklappe ein Ventilgehäuse 1 auf, das mit einem Durchflußkanal 2 und an dessen beiden Enden mit Flanschen 3, 4 versehen ist. Der eine Flansch 3 dient zum Anschluß einer Befüll- oder Entleerungsleitung (nicht dargestellt), während die Absperrklappe mit dem anderen Flansch 4 an einen ausschnittweise dargestellten Behälter 5 angeschlossen ist (Befestigungsmittel nicht dargestellt). Hierzu weist der Behälter 5 unten seitlich einen Anschlußflansch 6 mit einer Befüll- und Entleerungsöffnung 7 auf. Am behälterseitigen Ende des Durchflußkanales 2 ist im Ventilgehäuse 1 ein dem Behälter 5 zugewandter Ventilsitz 8 vorgesehen, mit dem ein Verschlußteil 9 zusammenwirkt, das beim Öffnen der Absperrklappe in den Behälter 5 hineinschwenkt. Das Verschlußteil 9 ist auf seiner dem Ventilgehäuse 1 abgewandten Seite mit einem Schwenkhebel 10 verbunden, der seinerseits innerhalb des Ventilgehäuses 1 drehfest mit einer Betätigungswelle 11 verbunden ist. Diese ist im Ventilgehäuse 1 gelagert und durchdringt dessen Wand 12 nach draußen.

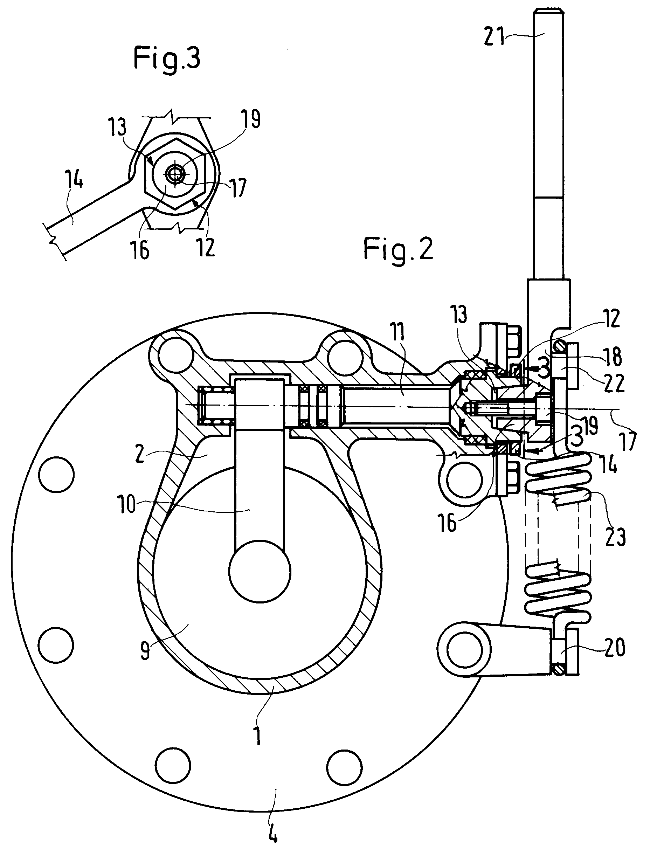

Das außerhalb des Ventilgehäuses 1 befindliche Ende der Betätigungswelle 11 weist an seinem Umfang einen Vielkant 12 auf (Fig. 3). Ferner ist dieses Ende der Betätigungswelle längs mit einer konischen Aufnahmebohrung 13 versehen. Ein Schließhebel 14 ist mit seinem einen Ende auf den Vielkant 12 der Betätigungswelle 11 aufgesetzt. Hierzu weist der Schließhebel 14 einen zur Betätigungswelle 11 komplementären Innenvielkant auf, während an seinem anderen Ende eine Öse 15 vorgesehen ist. In die Aufnahmebohrung 13 der Betätigungswelle 11 ragt ein zu ihr komplementär geformter konischer Zapfen 16 eines außerhalb des Ventilgehäuses 1 vorgesehenen Schwenkarmes 18 hinein. Mittels einer Schraube 19 werden die konischen Teilepartien 13, 16 fest ineinandergepreßt.

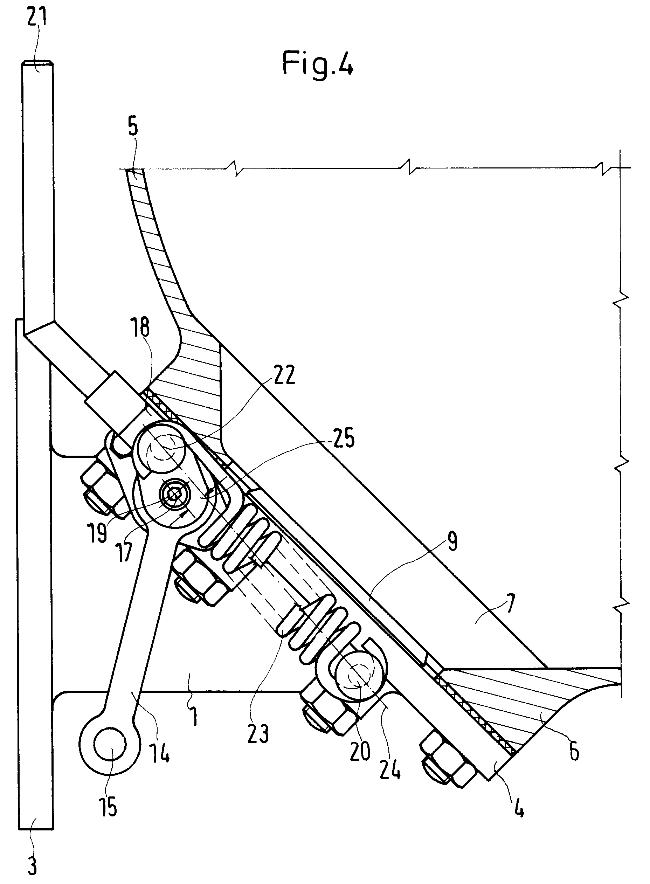

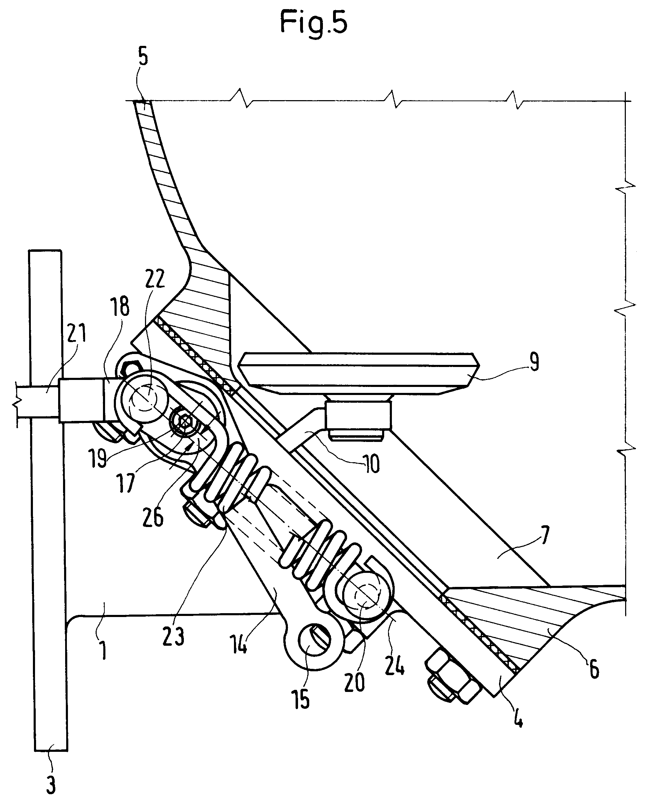

Der Schwenkarm 18 erstreckt sich quer zur Wellenlängsachse 17 der Betätigungswelle 11 in eine von einem außenseitig am Ventilgehäuse 1 vorgesehenen Widerlager 20 abgewandte Richtung. An seinem dortigen, der Betätigungswelle 11 fernen Ende trägt der Schwenkarm 18 einen Betätigungshebel 21 zum manuellen Öffnen und Schließen der Absperrklappe. Ferner weist der Schwenkarm 18 an jenem Ende auf der dem Ventilgehäuse 1 sowie der Betätigungswelle 11 abgewandten Seite einen Mitnehmer 22 auf, an dem eine außerhalb des Ventilgehäuses 1 befindliche Zugfeder 23 mit ihrem einen Ende angreift, während sie an ihrem anderen Ende an dem Widerlager 20 gehalten ist. Das Widerlager 20 und der Mitnehmer 22 sind so angeordnet, daß
- die Zugfeder 23 sich, in Vorderansicht des Flansches 4 betrachtet (Fig. 2), seitlich neben dem Flansch 4 befindet,
- die Längsrichtung und damit die lineare Bewegungsrichtung der Zugfeder 23 quer zur Wellenlängsachse 17 verläuft (Fig. 2) und
- eine gedachte Verbindungslinie 24 zwischen dem Widerlager 20 und dem Mitnehmer 22 mit seitlichem Versatz 25, 26 zu der Wellenlängsachse 17 verläuft (Fig. 4 und 5). In Richtung dieser Verbindungslinie 24 übt die Zugfeder 23 ihre Kraft aus.

In der Schließstellung des Verschlußteiles 9 erstreckt sich der Versatz 25 von der Wellenlängsachse 17 in jene Richtung, in die der Mitnehmer 22 sich bei einer Schließbetätigung der Absperrklappe bewegt (Fig. 4). In der Offenstellung des Verschlußteiles 9 erstreckt sich der Versatz 26 hingegen von der Wellenlängsachse 17 in jene Richtung, in die der Mitnehmer 22 sich bei einer Öffnungsbetätigung der Absperrklappe bewegt (Fig. 5).

Nachdem beim Zusammenbau der Absperrklappe das Verschlußteil 9 und die Betätigungswelle 11 in das Ventilgehäuse 1 eingebaut sind, wird der Schwenkarm 18 mit seinem Zapfen 16 lose in die Aufnahmebohrung 13 gesteckt und die Schraube 19 lose eingeschraubt. Der Betätigungshebel 21 wird sodann soweit im Öffnungssinn geschwenkt, bis die Zugfeder 23 problemlos in das Widerlager 20 und den Mitnehmer 22 eingehängt werden kann. Das Verschlußteil 9 wird gegen den Ventilsitz 8 gepreßt; dies kann unmittelbar durch manuelles Drücken auf das Verschlußteil 9 oder mittelbar durch Angreifen an dem in dem Freiraum zwischen dem Ventilgehäuse 1 und dem Schwenkarm 18 drehfest mit der Betätigungswelle 11 verbundenen Schließhebel 14 geschehen. Der Betätigungshebel 21 wird dann in Schließrichtung bewegt, bis der für die Schließstellung vorgesehene Versatz 25 der Verbindungslinie 24 gegenüber der Wellenlängsachse 17 erreicht ist. In dieser Position wird die Schraube 19 festgezogen, so daß die Betätigungswelle 11 und der Schwenkarm 18 in dieser Relativposition drehfest miteinander verbunden sind. Die Konusverbindung erlaubt eine stufenlose Justierung der Relativposition und auch das Spannen und Entspannen der Zugfeder 23 ist besonders einfach.

In der Schließstellung (Fig. 4) übt die Zugfeder 23 aufgrund des Versatzes 25 ein Drehmoment in Schließrichtung auf die Betätigungswelle 11 und damit eine Schließkraft auf das Verschlußteil 9 aus. Letzteres liegt dadurch dichtend auf dem Ventilsitz 8 auf; die Befüll- und Entleerungsöffnung 7 des Behälters 5 ist zuverlässig verschlossen. Es bedarf keines Sperr- oder Verriegelungsmechanismus, um das Verschlußteil 9 in dieser Position zu halten.

Zum Öffnen der Absperrklappe wird der Betätigungshebel 21 in Öffnungsrichtung geschwenkt. Die Kraft der Zugfeder 23 steigt dabei an. Zugleich verringert sich jedoch der Versatz 25 stetig und damit auch das auf die Betätigungswelle 11 in Schließrichtung wirkende Drehmoment. Wird der Versatz 25 zu Null, dann ist auch das Drehmoment Null; das Verschlußteil befindet sich in einer Teiloffenstellung. Wird der Betätigungshebel 21 weiter in Öffnungsrichtung geschwenkt, dann entsteht der in die entgegengesetzte Richtung weisende Versatz 26, durch den ein Drehmoment in Öffnungsrichtung an der Betätigungswelle 11 entsteht. Damit einher geht eine Verringerung der Kraft der Zugfeder 23. Dies hat zur Folge, daß das Verschlußteil 9 aus der momentanen Teiloffenstellung in die Offenstellung geschnellt wird und dort verharrt (Fig. 5). Eine Befüllung oder Entleerung des Behälters 5 kann erfolgen. Auch hierzu wird kein Sperr- oder Verriegelungsmechanismus benötigt.

Zum Schließen ist der Betätigungshebel 21 gegen die steigende Kraft der Zugfeder 23 in Schließrichtung zu bewegen, bis der Versatz 26 wieder verschwindet und sich der entgegengesetzt gerichtete Versatz 25 ausbildet. Die dabei auftretende Verringerung der Kraft der Zugfeder 23 und das dennoch ansteigende Schließmoment der Betätigungswelle 11 haben ein schlagartiges Schließen der Absperrklappe zur Folge. Anstelle des Schließens aus unmittelbarer Nähe über den Betätigungshebel 21 ist auch ein Schließen aus entfernter Position möglich, über eine nicht dargestellte Reißleine, die mit der Öse 15 des Schließhebels 14 zu verbinden ist. Bei entsprechendem Zug an der Reißleine schwenkt der Schließhebel 14 aus der Offenstellung in die Schließstellung. Die Öse 15 bewegt sich dabei aus ihrer dem Behälter 5 nahen Position (Fig. 5) in ihre dem Behälter 5 ferne Position.

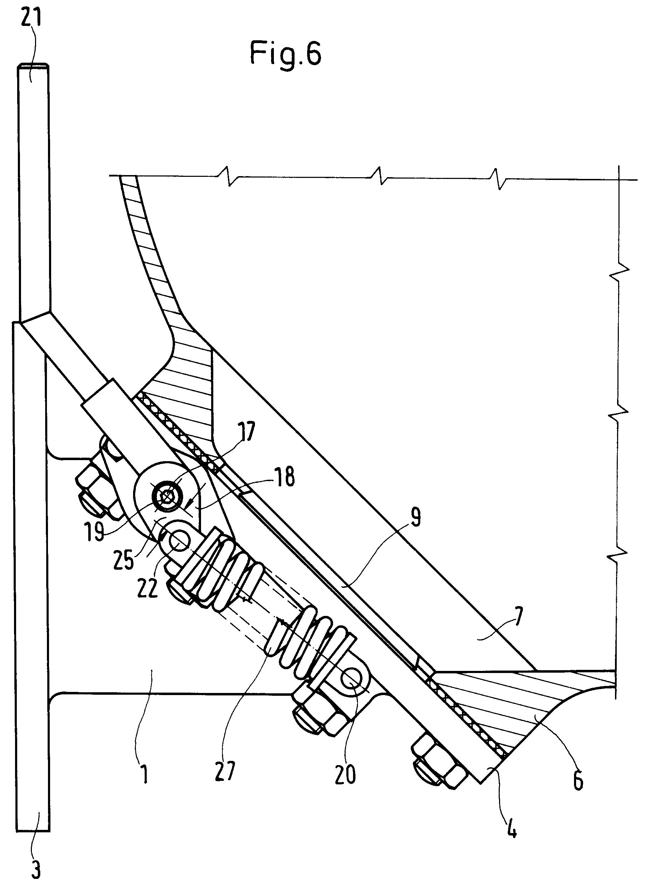

Die Absperrklappe nach Fig. 6 weist anstelle einer Zugfeder eine Druckfeder 27 auf, die zwischen dem gehäuseseitigen Widerlager 20 und dem Mitnehmer 22 am Schwenkarm 18 eingespannt ist. Der Schwenkarm 18 erstreckt sich mit seinem wellenfernen Ende, an dem der Mitnehmer 22 angeordnet ist, in die dem Widerlager 20 zugewandte Richtung. Auch an dieser Absperrklappe weist die zwischen dem Widerlager 20 und dem Mitnehmer 22 gedachte Verbindungslinie 24 den Versatz 25, 26 zur Wellenlängsachse 17 auf. Hinsichtlich der Betätigung und Funktion gilt das zuvor Beschriebene in gleicher Weise.

Der in den Fig. 2 - 5 gezeigte Schließhebel zur Fernbetätigung kann auch an der Absperrklappe nach Fig. 6 vorgesehen werden. Ebenso kann, wenn nicht zweckmäßig, bei den erfindungsgemäßen Absperrklappen auf diesen Schließhebel verzichtet werden. Für die Justierung oder eine Betätigung nach Verlust des Betätigungshebels 21 kann dann nötigenfalls ein Schraubenschlüssel auf den Vielkant der Betätigungswelle aufgesetzt werden.

Die außenliegende Zug- bzw. Druckfeder 23, 27 ist stets ohne weiteres sichtbar. Ein evtl. Schaden an ihr fällt daher sofort ins Auge. Auch muß mit dem Werkstoff der Zug- bzw. Druckfeder 23, 27 keine Rücksicht auf das unter Umständen sehr aggressive Medium im Behälter genommen werden. Daher kann ein kostengünstiger und zugleich bewährter Federwerkstoff Verwendung finden. All dies ist für die Funktionssicherheit der Absperrklappe von großem Vorteil. Alle Funktionsteile sind in dem an den Flansch 4 angrenzenden Gehäusebereich angeordnet (die Anordnung der Zug- bzw. Druckfeder 23, 27 außerhalb des Flanschumfanges schafft hierfür die Voraussetzungen). Nur in diesem Bereich muß das Ventilgehäuse 1 für die Aufnahme bzw. Halterung der Funktionselemente gestaltet sein. Der gesamte übrige Gehäuseteil bildet lediglich den Durchflußkanal 2 und kann entsprechend dünnwandig ausgebildet werden, so daß ein besonders leichtbauendes Ventilgehäuse erreicht ist.

## Patentansprüche

1. Absperrklappe mit
- einem Ventilgehäuse, das einen Durchflußkanal und einen Ventilsitz aufweist,
- einer die Wand des Ventilgehäuses durchsetzenden Betätigungswelle, an der außerhalb des Ventilgehäuses Betätigungsmittel angreifen,
- einem mit dem Ventilsitz zusammenwirkenden, schwenkbeweglichen Verschlußteil, das innerhalb des Ventilgehäuses mit der Betätigungswelle verbunden ist, und
- einer im Schließsinn auf die Betätigungswelle einwirkenden Feder,
dadurch gekennzeichnet, daß
- die Feder (23, 27) linearbeweglich ausgebildet und außerhalb des Ventilgehäuses (1) so angeordnet ist, daß ihre Bewegungsrichtung quer zur Wellenlängsachse (17) der Betätigungswelle (11) verläuft,
- außerhalb des Ventilgehäuses (1) an der Betätigungswelle (11) ein quer zur Wellenlängsachse (17) verlaufender Schwenkarm (18) angeordnet ist, der an seinem wellenfernen Ende einen Mitnehmer (22) für das eine Ende der Feder (23, 27) aufweist,
- außenseitig am Ventilgehäuse (1) ein Widerlager (20) für das andere Ende der Feder (23, 27) angeordnet ist und
- der Mitnehmer (22) und das Widerlager (20) so angeordnet sind, daß in der Schließstellung des Verschlußteiles (9) eine gedachte Verbindungslinie (24) zwischen dem Widerlager (20) und dem Mitnehmer (22) mit einem sich in Richtung der Schließbewegung erstreckenden seitlichen Versatz (25) zur Wellenlängsachse (17) verläuft.

2. Absperrklappe nach Anspruch 1,
dadurch gekennzeichnet, daß der Mitnehmer (22) und das Widerlager (20) so angeordnet sind, daß in der Offenstellung des Verschlußteiles (9) eine gedachte Verbindungslinie (24) zwischen dem Widerlager (20) und dem Mitnehmer (22) mit einem sich in Richtung der Öffnungsbewegung erstreckenden seitlichen Versatz (26) zur Wellenlängsachse (17) verläuft.

3. Absperrklappe nach Anspruch 1 oder 2,
dadurch gekennzeichnet, daß die Feder als Zugfeder (23) ausgebildet ist und der Schwenkarm (18) sich mit seinem wellenfernen Ende in Richtung von dem Widerlager (20) fort erstreckt.

4. Absperrklappe nach Anspruch 1 oder 2,
dadurch gekennzeichnet, daß die Feder als Druckfeder (27) ausgebildet ist und der Schwenkarm (18) sich mit seinem wellenfernen Ende in Richtung zu dem Widerlager (20) hin erstreckt.

5. Absperrklappe nach einem oder mehreren der vorhergehenden Ansprüche,
dadurch gekennzeichnet, daß
- zur Verbindung von Betätigungswelle (11) und Schwenkarm (18) zwei konische Teilepartien in Form eines konischen Zapfens (16) und einer komplementären konischen Aufnahmebohrung (13) vorgesehen sind, wobei die eine Teilepartie am gehäuseaußenseitigen Ende der Betätigungswelle (11) und die andere an dem Schwenkarm (18) angeordnet ist, und
- Spannmittel (19) vorgesehen sind, die die konischen Teilepartien ineinanderpressen.

6. Absperrklappe nach einem oder mehreren der vorhergehenden Ansprüche,
dadurch gekennzeichnet, daß die Betätigungsmittel als Betätigungshebel (21) ausgebildet sind, der an dem Schwenkarm angeordnet ist.

7. Absperrklappe nach einem oder mehreren der vorhergehenden Ansprüche,
dadurch gekennzeichnet, daß die Betätigungswelle (11) außerhalb des Ventilgehäuses (1) Angriffsflächen (12) für Schwenkmittel (14) aufweist.

8. Absperrklappe nach Anspruch 7,
dadurch gekennzeichnet, daß der Schwenkarm (18) mit Abstand zum Ventilgehäuse (1) an der Betätigungswelle (11) angeordnet ist und die Angriffsflächen (12) zwischen dem Ventilgehäuse (1) und dem Schwenkarm (18) angeordnet sind.

9. Absperrklappe nach einem oder mehreren der vorhergehenden Ansprüche,
dadurch gekennzeichnet, daß
- das Ventilgehäuse (1) einen Flansch (4) zum Anschluß an einen Behälter (5) aufweist,
- die Betätigungswelle (11) und das Widerlager (11) in Flanschnähe angeordnet sind und
- die Feder (23, 27) - in Vorderansicht des Flansches (4) betrachtet - neben dem Flansch (4) angeordnet ist.
